# FASCICULE DE BREVET EUROPEEN

(11) **EP 3 729 324 B1**
(45) Date de publication et mention de la délivrance du brevet: **27.11.2024**
(21) Numéro de dépôt: 18822406.7
(22) Date de dépôt: 21.12.2018
(51) Int. Cl.: G06F 21/85, H04L 12/46, H04L 9/40

(54) **PROCÉDÉ DE SÉCURISATION D'UN PROTOCOLE USB PAR AUTHENTIFICATION D'UN PÉRIPHÉRIQUE USB PAR UN APPAREIL ET PAR CHIFFREMENT DES ÉCHANGES ENTRE LE PÉRIPHÉRIQUE ET L'APPAREIL ET DISPOSITIFS ASSOCIÉS**
VERFAHREN ZUR SICHERUNG EINES USB-PROTOKOLLS DURCH AUTHENTIFIZIERUNG EINES USB-PERIPHERIEGERÄTS DURCH EINE VORRICHTUNG UND DURCH VERSCHLÜSSELUNG DES AUSTAUSCHS ZWISCHEN DEM PERIPHERIEGERÄT UND DER VORRICHTUNG SOWIE ZUGEHÖRIGE VORRICHTUNGEN
METHOD FOR SECURING A USB PROTOCOL BY AUTHENTICATION OF A USB PERIPHERAL BY AN APPARATUS AND BY ENCRYPTION OF THE EXCHANGES BETWEEN THE PERIPHERAL AND THE APPARATUS, AND ASSOCIATED DEVICES

(30) Priorité: 21.12.2017 FR 1701349
(43) Date de publication de la demande: 28.10.2020
(73) Titulaire: THALES, 92400 Courbevoie (FR)
(72) Inventeur: ASHTARI, Darius, 92622 GENNEVILLIERS CEDEX (FR); DUPREZ, Adrien, 92622 GENNEVILLIERS CEDEX (FR); BESSOU, Thomas, 92622 GENNEVILLIERS CEDEX (FR)
(74) Mandataire: Lavoix
(86) Numéro de dépôt international: PCT/EP2018/086720
(87) Numéro de publication internationale: WO 2019/122390

(56) Documents cités:
- US-A1- 2012 084 849
- US-A1- 2013 346 660
- US-A1- 2016 299 865

## Description

La présente invention concerne un procédé de sécurisation d'un protocole USB. Le procédé de sécurisation est un procédé de sécurisation d'un protocole USB par authentification d'un périphérique USB par un appareil et par chiffrement des échanges entre le périphérique et l'appareil.

Le protocole USB a été réalisé pour permettre l'utilisation d'une grande diversité de périphériques de la manière la plus simple possible. Le protocole USB est ainsi incontournable dans les équipements du fait notamment de son universalité. L'utilisation du protocole USB est ainsi multiple : insertion d'accessoires comme un clavier ou une caméra, mises à jour logicielles ou chargement de configuration.

La grande polyvalence de l'USB, qui rend cette norme très appréciée et utilisée, a comme contrepartie une grande surface d'attaque.

De manière générale, un périphérique malveillant (par exemple, une clé USB malveillante) attaque l'hôte (appareil sur lequel on branche ladite clé) et cherche à déclencher un ou plusieurs des défauts suivants : exécution de code malveillant, compromission de données (« aspiration » de données de l'hôte sur le périphérique) ou déni de service. Il est à noter que, sans mesure prise, un périphérique USB malveillant peut potentiellement utiliser toutes les fonctionnalités permises par l'interface USB : commande clavier, liaison série, messages Ethernet, etc...

Pour cela, le périphérique exploite la vulnérabilité du protocole USB qui ne propose aucune vérification du fait que ledit périphérique est bien celui qu'il prétend être. En effet, le périphérique USB branché annonce lors de son branchement sur l'hôte son constructeur et son modèle et l'hôte met alors en oeuvre le pilote correspondant à ces informations annoncées. Il n'y a aucune vérification des informations fournies à l'hôte.

Si un attaquant est capable de créer un périphérique USB encapsulant un dispositif d'attaque dans un périphérique à l'aspect d'une clé USB banale du commerce, plusieurs scénarios d'attaque sont alors possibles. Trois scénarios sont donnés dans ce qui suit à titre d'exemple.

Selon un premier scénario d'attaque, l'attaque est une attaque par détournement applicatif. Le périphérique se présente à l'hôte comme un clavier ou une souris et simule des interactions utilisateurs pour déclencher un comportement indésirable ou une exécution de code.

Par exemple, il est branché un périphérique malveillant sur un ordinateur dont le rôle nominal est de commander les ouvertures de portes d'un bâtiment sécurisé sous la supervision d'un opérateur, et le périphérique émulant une souris va modifier par l'interface homme-machine le contrôle d'accès sans que l'opérateur ne fasse rien. Selon un autre exemple, un raccourci clavier « ouvrir un terminal » est créé puis on tape des commandes écrivant un script et l'exécutant.

Selon un deuxième scénario d'attaque, l'attaque est une attaque par détournement réseau. Le périphérique se présente comme une carte réseau Ethernet. La carte réseau Ethernet la plus récente prenant la priorité sur les autres, le trafic réseau est détourné vers le périphérique qui peut alors écouter et enregistrer voire modifier ce dernier - cela pouvant, lorsque combiné à d'autres éléments (tels qu'une mise à jour par HTTP au lieu de HTTPS), aboutir à de l'exécution de code arbitraire.

Selon un troisième scénario d'attaque le périphérique se présente sous un profil falsifié, comme, par exemple, un vieux décodeur TNT oublié dont le pilote présente une faille. Le périphérique peut alors l'exploiter et récupérer un accès système à l'hôte.

La simplicité du protocole USB étant obtenue au détriment de la sécurité, les attaques utilisant un périphérique USB comme vecteur se sont multipliées.

Il est donc souhaitable de sécuriser l'utilisation d'un périphérique USB.

Pour cela, il est connu, lorsque le système d'exploitation de l'hôte est préparé, de choisir d'activer uniquement certains pilotes spécifiques à un type de périphérique USB. Ces pilotes spécifiques sont souvent désignés comme des « class drivers ».

Par exemple, si l'on choisit d'activer seulement le pilote « Mass Storage », seuls les périphériques de stockage de masse fonctionnent et l'attaquant n'est pas en mesure d'émuler un clavier, ni une carte réseau, ni le vieux décodeur TNT.

Toutefois, si l'appareil doit conserver le support des claviers, cartes audio ou cartes réseau, il n'est pas possible d'appliquer une telle méthode de protection. Cette méthode de protection n'est donc satisfaisante que dans le cas des hôtes n'ayant besoin que de périphériques de stockage de masse.

De manière alternative, à chaque insertion de périphérique USB, l'hôte peut demander à l'utilisateur de quel type de périphérique il s'agit avant d'activer les fonctionnalités du périphérique. Ainsi, si un périphérique malveillant cherche à émuler un clavier ou une carte réseau alors que l'utilisateur s'attend à être en train de brancher un périphérique de stockage de masse, l'accès est refusé et l'attaque déjouée, grâce à l'opérateur.

Cependant, une telle technique est lourde pour l'utilisateur. La technique est également incompatible avec les usages requérant la présence d'un périphérique USB spécifique au démarrage de l'appareil. Enfin, la présence d'une interface homme-machine n'est pas toujours compatible des contraintes d'un équipement embarqué.

En outre, cette technique ne permet pas de faire la différence entre un clavier bienveillant (normal) et un clavier malveillant, par exemple un périphérique malveillant déguisé en récepteur de clavier/souris sans fil, qui se verrait donc accorder par l'utilisateur le droit d'envoyer des entrées clavier/souris.

De part l'analyse sommaire précédente des attaques possibles, il est clair que le branchement et l'acceptation par l'hôte d'un périphérique qui s'avère être piégé est le prérequis à toutes ces attaques par USB. Par conséquent, si l'authenticité du périphérique est parfaitement garantie avant de l'accepter, l'hôte ne craint plus ces attaques. Pour cette raison, une méthode visant à garantir la non malveillance d'un périphérique branché en l'authentifiant avant de lui accorder les accès dont le périphérique a besoin pour fonctionner peut être conçue.

Toutefois, la garantie d'authenticité avant tout accès est bien sûr impossible à obtenir : il faudra un minimum de communications avec l'hôte pour précisément réaliser cette authentification, et l'hôte restera donc nécessairement vulnérable à toute exploitation d'une vulnérabilité présente à un niveau inférieur à celui où est réalisée l'authentification. Ainsi, plus l'authentification est réalisée à bas niveau, plus on réduit la surface d'attaque.

Le protocole USB de type C propose une méthode d'authentification des périphériques USB. Pour cela, la méthode propose de télécharger la chaîne de certificats jusqu'au périphérique et d'effectuer un test pour vérifier que le périphérique est bien que le périphérique prétend être.

Un tel protocole USB de type C est utile dans un certain nombre de cas. Par exemple, il peut être cité les cas suivants : un vendeur inquiété par la possibilité de dommages causés à ses appareils par des chargeurs de basse qualité peut forcer ses appareils à n'accepter la recharge que depuis des chargeurs certifiés ; un utilisateur inquiété par la recharge de son appareil dans un terminal public peut activer un mode dans lequel l'appareil n'accepte la recharge que si le chargeur est certifié ou une organisation, inquiétée par la possibilité que des périphériques non identifiables gagnent des accès aux postes de travail, peut définir une politique d'accès selon laquelle seuls des périphériques certifiés par l'organisation peuvent être utilisés.

En revanche, tout le reste des communications reste inchangé, non chiffré. Cela rend le système vulnérable aux attaques de type Man-In-The-Middle (MITM). L'attaque de l'homme du milieu (HDM) ou man-in-the-middle attack (MITM), parfois appelée attaque de l'intercepteur, est une attaque qui a pour but d'intercepter les communications entre deux parties, sans que ni l'une ni l'autre ne puisse se douter que le canal de communication entre elles a été compromis.

Une telle attaque est possible dans au moins un cas décrit ci-après. L'attaquant branche un périphérique officiel sur son périphérique malveillant, et le périphérique malveillant à l'hôte (ou, le périphérique malveillant est relié d'une manière ou d'une autre, éventuellement sans fil, à un périphérique officiel). Le périphérique malveillant transfère toutes les commandes relatives à l'authentification au périphérique officiel et transfère ses réponses à l'hôte. L'hôte accorde alors les accès au périphérique malveillant.

La demande de brevet américaine US 2012/084849 A1 divulgue un procédé utilisant les protocoles RNDIS, TCP et TLS entre un hôte et un périphérique pour leur permettre de communiquer de façon fiable et sécurisée au-dessus d'un protocole USB.

Il subsiste donc un besoin pour un procédé de sécurisation d'un protocole USB utilisé entre un périphérique et un appareil, le procédé garantissant notamment une meilleure sécurité pour l'appareil.

Pour cela, la présente description porte sur un procédé de sécurisation d'un protocole USB par authentification d'un périphérique par un appareil et par chiffrement des échanges entre le périphérique et l'appareil, le périphérique fonctionnant selon le protocole USB, l'appareil comportant au moins un port d'entrée, le procédé comportant au moins l'étape de branchement du périphérique à un port d'entrée, de détection par l'appareil du périphérique uniquement si le périphérique a activé un protocole de transformation de l'USB en réseau local à commutation de paquets, dit réseau local, de connexion de l'appareil au réseau local, un des éléments parmi l'appareil et le périphérique étant un serveur pour le réseau local, le serveur étant propre à communiquer au niveau de la couche de transport selon un unique protocole prédéfini, d'établissement d'un canal de communication entre l'autre élément parmi l'appareil et le périphérique et le serveur et de demande par le périphérique des droits d'accès à l'appareil via le canal de communication.

Suivant des modes de réalisation particuliers, le procédé comprend, en outre, une ou plusieurs des caractéristiques suivantes, prise(s) isolément ou suivant toutes les combinaisons techniquement possibles :
- à l'étape de connexion, l'appareil se connecte via une adresse IP spécifique.
- lors de l'étape de connexion, les communications émanant de protocoles différents du protocole prédéfini sont filtrées.
- le protocole prédéfini est un protocole garantissant l'établissement et le maintien d'un canal de communication sécurisé, en particulier avec authentification préalable des parties prenantes au canal de communication.
- le protocole prédéfini est un protocole choisi dans le groupe constitué du protocole SSH, du protocole SSL et du protocole TLS.
- le canal de communication est un canal chiffré.
- le canal de communication est chiffré selon un protocole de chiffrement asymétrique, le protocole de chiffrement asymétrique comportant de préférence un ensemble de clés privées, chaque clé privée étant mémorisée dans un coffre-fort numérique du périphérique.

La présente description se rapporte également à un périphérique fonctionnant selon un protocole USB, le périphérique étant adapté pour la mise en oeuvre d'au moins une étape du procédé de sécurisation du protocole USB par authentification du périphérique par un appareil et par chiffrement des échanges entre le périphérique (14) et l'appareil, le procédé de sécurisation étant tel que précédemment décrit.

Le périphérique comprend une ou plusieurs des caractéristiques suivantes, prise(s) isolément ou suivant toutes les combinaisons techniquement possibles :
- le périphérique est adapté à bloquer les échanges avec l'appareil lorsque l'appareil est incapable de mettre en oeuvre le procédé de sécurisation en interaction avec le périphérique.
- le périphérique, dit premier périphérique, comporte au moins un port d'entrée propre à accueillir un deuxième périphérique, le deuxième périphérique fonctionnant selon un protocole USB, le premier périphérique étant également adapté pour la mise en oeuvre d'au moins une étape d'un procédé de sécurisation du protocole USB par authentification du deuxième périphérique par le premier périphérique et par chiffrement des échanges entre le premier périphérique et le deuxième périphérique, le procédé de sécurisation étant tel que précédemment décrit.

La présente description concerne aussi un appareil comportant au moins un port d'entrée, l'appareil étant adapté pour la mise en oeuvre d'au moins une étape du procédé de sécurisation tel que précédemment décrit.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une représentation schématique d'un ensemble informatique, et
- figure 2, un schéma illustrant le fonctionnement de l'ensemble informatique.

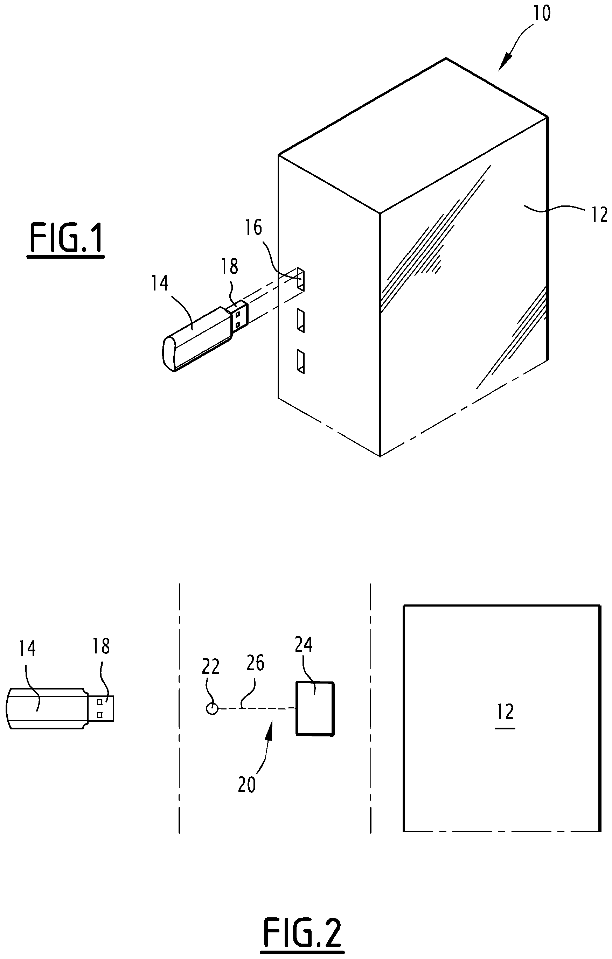

Un ensemble informatique 10 est schématisé sur la figure 1.

L'ensemble informatique 10 comporte un appareil 12 et un périphérique 14.

Un appareil 12 comportant au moins un port 16 d'entrée. Le port 16 est adapté pour accueillir une partie 18 du périphérique 14.

L'appareil 12 est, par exemple, un ordinateur.

Le périphérique 14 est, par exemple, un clavier.

Le périphérique 14 est propre à fonctionner selon un protocole USB.

Le Universal Serial Bus (USB, en français Bus Universel en Série) est une norme relative à un bus informatique en transmission série qui sert à connecter des périphériques 14 informatiques à un ordinateur ou à tout type d'appareil 12 prévu à cet effet (tablette, smartphone). Le bus USB permet de connecter des périphériques 14 à chaud (quand l'ordinateur est en marche) et en bénéficiant du Plug and Play qui reconnaît automatiquement le périphérique 14. Il peut alimenter les périphériques 14 peu gourmands en énergie (clé USB, disques SSD).

Le périphérique 14 est pourvu d'un protocole de transformation de l'USB en réseau 20 local à commutation de paquets, le protocole de transformation étant activable ou non par le périphérique 14.

A titre d'exemple, le périphérique 14 est muni d'un protocole dit « Ethernet over USB » permettant d'assurer que le périphérique 14 est un noeud d'un réseau Ethernet 20, un réseau Ethernet étant un réseau local 20 à commutation de paquets.

Il est à noter que, lorsque le protocole de transformation est activé, le périphérique 12 est configuré pour être seulement un noeud du réseau local 20 à commutation de paquets, c'est-à-dire à proposer uniquement un service d'émulation du réseau local 20 sur le protocole USB. Cela implique que l'ensemble des autres services fournis par le service USB sont interdits ou inhibés.

Le périphérique 14 comporte un coffre-fort numérique propre à mémoriser des données.

Par exemple, le coffre-fort est une zone de sécurité d'un microprocesseur, comme une mémoire sécurisée.

En variante, le coffre-fort est un microprocesseur de sécurité, notamment un microprocesseur propre à mettre en oeuvre un protocole TPM (sigle pour le terme anglais de « Trusted Platform Module » signifiant littéralement « Module de plateforme de confiance »).

Selon une autre variante, le coffre-fort est une carte à puce.

Dans l'exemple décrit, le coffre-fort numérique mémorise des éléments d'authentification.

Le fonctionnement de l'ensemble informatique 10 est maintenant décrit en référence à un exemple de mise en oeuvre d'un procédé de sécurisation du protocole USB par authentification du périphérique 14 par l'appareil 12 et par chiffrement des échanges entre le périphérique 14 et l'appareil 12 dont le résultat est schématisé sur la figure 2.

Le procédé comporte une étape de branchement, une étape de détection, une étape de connexion, une étape d'établissement, une étape de demande, une étape de fourniture et une étape d'exploitation.

Lors de l'étape de branchement, le périphérique 14 est branché à un port 16 d'entrée de l'appareil 12.

Lors de l'étape de détection, l'appareil 12 tente de détecter le périphérique 14.

La détection du périphérique 14 n'a lieu que si le périphérique 14 a activé un protocole de transformation. Cela signifie que le périphérique 14 est un noeud 22 d'un réseau local 20 à commutation de paquets. Un tel réseau est appelé réseau local 20 dans ce qui suit.

Lors de l'étape de connexion, l'appareil 12 se connecte au réseau local 20 via une adresse IP spécifique.

Une adresse IP (le sigle IP renvoyant au terme anglais d'« Internet Protocol » signifiant littéralement protocole internet) est un numéro d'identification qui est attribué de façon permanente ou provisoire à chaque appareil connecté à un réseau informatique utilisant le protocole internet. L'adresse IP est à la base du système d'acheminement (le routage) des messages sur Internet.

L'appareil 12 se connecte alors sous la forme d'un serveur 24 propre à communiquer au niveau de la couche de transport selon un unique protocole préfini.

La couche de transport est, selon le modèle OSI, une couche intermédiaire de la couche réseau et de la couche session.

La couche transport gère les communications de bout en bout entre processus. Cette couche est souvent la plus haute couche où on se préoccupe de la correction des erreurs.

Plusieurs protocoles sont possibles dans la couche de transport, à savoir le protocole DCCP (de l'anglais « Datagram Congestion Control Protocol » signifiant littéralement « protocole de contrôle de congestion de datagramme »), le protocole SPX (de l'anglais « Sequenced packet exchange » signifiant littéralement « échange séquencé de paquets »), le protocole SCTP (de l'anglais « Stream Control Transmission Protocol » signifiant littéralement « protocole de transmission de flux contrôlé »), le protocole TCAP (de l'anglais « Transaction Capabilities Application Part » signifiant littéralement « Partie d'application de capacités de transaction »), le protocole TCP (de l'anglais « Transmission Control Protocol » signifiant littéralement « protocole de contrôle de transmission ») ou le protocole UDP (de l'anglais « User Datagram Protocol» signifiant littéralement « protocole de datagramme utilisateur »).

Selon le mode de réalisation considéré, le protocole prédéfini est un des protocoles précités.

De préférence, le protocole prédéfini est un protocole garantissant l'établissement et le maintien d'un canal de communication sécurisé, en particulier avec authentification préalable des parties prenantes au canal de communication.

Ainsi, parmi les protocoles précités, le protocole TCP est particulièrement adapté pour le protocole prédéfini du fait que le protocole TCP est un protocole de transport fiable.

Plus précisément, dans l'exemple décrit, l'appareil 12 se connecte sous la forme d'un serveur 24 communiquant uniquement selon le protocole prédéfini.

Cela signifie que, lors de l'étape de connexion, les communications émanant de protocoles différents du protocole prédéfini sont filtrées, notamment par le serveur 24.Le filtrage est, par exemple, mis en oeuvre à l'aide d'un logiciel spécifique.

Un exemple de logiciel spécifique est le logiciel iptables qui est un logiciel libre de l'espace utilisateur Linux grâce auquel l'administrateur système peut configurer les chaînes et règles dans le pare-feu en espace noyau.

Selon l'exemple détaillé ici, l'appareil 12 se connecte sous la forme d'un serveur SSH 24.

Le sigle SSH renvoie au terme anglais de « Secure Shell » signifiant littéralement « interpréteur de commandes sécurisé». Un serveur SSH 24 est à la fois un programme informatique et un protocole de communication sécurisé. Le protocole de connexion impose un échange de clés de chiffrement en début de connexion. Par la suite, tous les segments échanges sont authentifiés et chiffrés. Cela rend impossible d'utilisation d'un sniffer pour observer l'appareil 12 ou pour nuire à l'intégrité des échanges entre 12 et 14.

Dans un tel cas, le protocole prédéfini est le protocole SSH.

En variante, l'appareil 12 se connecte sous la forme d'un serveur SSL ou TLS. Dans une telle variante, le protocole prédéfini est le protocole SSL ou le protocole TLS.

Le sigle SSL renvoie au terme anglais de « Secure Sockets Layer » signifiant littéralement « Couche de connecteurs sécurisés» alors que le sigle TLS renvoie au terme anglais de « Sécurité de la couche de transport» signifiant littéralement « Couche de transport sécurité ». Le protocole TLS et le protocole SSL sont des protocoles de sécurisation des échanges sur Internet. Le terme SSL/TLS est également utilisé indifféremment pour désigner ces protocoles, le protocole TLS étant le successeur du protocole SSL.

Les deux protocoles SSL et TLS fonctionnent suivant un mode client-serveur et permettent de satisfaire un certain nombre de contraintes de sécurité, notamment l'authentification du serveur et du client mais aussi la confidentialité et l'intégrité des données échangées.

Lors de l'étape d'établissement, le périphérique 14 requiert l'établissement d'un canal de communication 26 entre le périphérique 14 et le serveur 24, c'est-à-dire indirectement entre le périphérique 14 et l'appareil 12.

Le canal de communication 26 est un canal chiffré.

Selon l'exemple décrit, le chiffrement est réalisé selon un protocole de chiffrement asymétrique.

Le chiffrement asymétrique ou la cryptographie asymétrique est un domaine de la cryptographie où il existe une distinction entre des données publiques et privées, en opposition à la cryptographie symétrique où la fonctionnalité est atteinte par la possession d'une donnée secrète commune entre les différents participants.

L'algorithme RSA est un exemple particulier de protocole de chiffrement asymétrique.

Avantageusement, le protocole de chiffrement asymétrique comporte un ensemble de clés privées, chaque clé privée étant mémorisée dans le coffre-fort du périphérique 14.

Lors de l'étape de demande, le périphérique 14 demande des droits d'accès à l'appareil 12 via le canal de communication 26.

En l'espèce, les droits d'accès sont les éléments dont a besoin le périphérique 14 pour fonctionner.

A ce stade, l'appareil 12 est capable de déterminer si le périphérique 14 est un périphérique USB sécurisé ou non.

En supposant que dans l'exemple décrit, l'appareil 12 détermine que le périphérique 14 est un périphérique USB sécurisé, l'appareil 12 fournit les droits d'accès au périphérique 14 lors de l'étape de fourniture.

Lors de l'étape d'exploitation, comme le périphérique 14 dispose des droits d'accès fournis par l'appareil 12, le périphérique 14 est capable de fonctionner normalement.

Le procédé propose repose ainsi sur un principe permettant d'obtenir les fonctionnalités des périphériques USB classiques (stockage de masse, clavier, casque audio, réseau...) au travers d'une connexion authentifiée et chiffrée TCP (SSH, SSL ou TLS), afin de limiter drastiquement la surface d'attaque par réduction du nombre de profils USB dans l'appareil 12 au seul réseau local 20. La surface d'attaque est réduite en ne permettant le passage d'une attaque que via le protocole SSH ou SSL ou TLS. Le procédé offre, en outre, la possibilité d'une rupture protocolaire ou d'une encapsulation protocolaire vers une instance logicielle maîtrisée sur l'appareil 12.

Le procédé de sécurisation assure en exploitation qu'après authentification, la connexion est chiffrée de sorte que l'attaque de l'homme du milieu est impossible. Il est donc impossible de prendre connaissance des échanges mais également de nuire à l'intégrité des échanges sans que cela soit détectable.

En outre, quand bien même un attaquant viendrait à avoir connaissance de la clé privée de l'un des périphériques 14, ou modifierait un appareil 12 autorisé pour le rendre malveillant, puisqu'on s'abstrait du protocole USB, il devrait faire face à une rupture protocolaire : un périphérique 14 authentifié compromis ne pourra pas utiliser les éventuelles failles du class driver classiquement associé à ce périphérique 14. Dans le cas du clavier, on peut aisément filtrer les entrées clavier en modifiant le programme simulant les entrées utilisateur de façon à limiter au maximum les détournements applicatifs possibles sans modifier le système d'exploitation.

Ainsi, le procédé de sécurisation est un procédé permettant d'utiliser un périphérique 14 fonctionnant selon un protocole USB de manière sécurisée pour l'appareil 12.

Il est, en outre, à noter que le procédé de sécurisation est un procédé automatisé de sécurisation du périphérique 14. De fait, aucune intervention de l'utilisateur hormis le branchement du périphérique 14 n'est requise, notamment ni la saisie d'un mot de passe ni une validation sur un écran. De plus, le procédé de sécurisation est aisé à mettre en oeuvre et notamment adapté pour une application embarquée.

En outre, le procédé peut être utilisé en série en utilisant d'abord le procédé pour un premier périphérique 14 qui, une fois validé, peut servir d'appareil 12 pour un deuxième périphérique 14 fonctionnant selon le protocole USB par mise en oeuvre du même procédé, le deuxième périphérique 14 devenant le premier périphérique 14 et le premier périphérique 14 l'appareil 12.

Selon une autre variante, lors de l'étape de connexion de l'appareil 12 au réseau local 20, le périphérique 14 est le serveur alors que l'appareil 12 est un noeud et lors de l'étape d'établissement, le canal de communication 26 est établi entre l'appareil 12 et le serveur 24.

Il est également à noter que le périphérique 14 est adapté à bloquer les échanges avec l'appareil 12 lorsque l'appareil 12 est incapable de mettre en oeuvre le procédé de sécurisation en interaction avec le périphérique 14. Cela garantit que l'accès aux données du périphérique 14 n'est pas possible pour un appareil 12 qui serait un appareil non-sécurisé au sens du protocole prédéfini.

L'invention concerne toute combinaison techniquement possible des modes de réalisations précédemment décrits.

## Revendications

1. Procédé de sécurisation d'un protocole USB par authentification d'un périphérique (14) par un appareil (12) et par chiffrement des échanges entre le périphérique (14) et l'appareil (12), le périphérique (14) fonctionnant selon le protocole USB, l'appareil (12) comportant au moins un port (16) d'entrée, le procédé comportant au moins l'étape de :
- branchement du périphérique (14) à un port (16) d'entrée,
- détection par l'appareil (12) du périphérique (14) uniquement si le périphérique (14) a activé un protocole de transformation de l'USB en réseau local à commutation de paquets, dit réseau local (20),
- connexion de l'appareil (12) au réseau local (20), un des éléments parmi l'appareil (12) et le périphérique (14) étant un serveur (24) pour le réseau local (20), le serveur (24) étant propre à communiquer au niveau de la couche de transport selon un unique protocole prédéfini,
- établissement d'un canal de communication (26) entre l'autre élément parmi l'appareil (12) et le périphérique (14) et le serveur (24),
- demande par le périphérique (14) des droits d'accès à l'appareil (12) via le canal de communication (26).

2. Procédé selon la revendication 1, dans lequel, à l'étape de connexion, l'appareil (12) se connecte via une adresse IP spécifique.

3. Procédé selon la revendication 1 ou 2, dans lequel, lors de l'étape de connexion, les communications émanant de protocoles différents du protocole prédéfini sont filtrées.

4. Procédé selon l'une quelconque des revendications 1 à 3, dans lequel le protocole prédéfini est un protocole garantissant l'établissement et le maintien d'un canal de communication sécurisé, en particulier avec authentification préalable des parties prenantes au canal de communication.

5. Procédé selon l'une quelconque des revendications 1 à 4, dans lequel le protocole prédéfini est un protocole choisi dans le groupe constitué du protocole SSH, du protocole SSL et du protocole TLS.

6. Procédé selon l'une quelconque des revendications 1 à 5, dans lequel le canal de communication (26) est un canal chiffré.

7. Procédé selon la revendication 6, dans lequel le canal de communication (26) est chiffré selon un protocole de chiffrement asymétrique, le protocole de chiffrement asymétrique comportant de préférence un ensemble de clés privées, chaque clé privée étant mémorisée dans un coffre-fort numérique du périphérique (14).

## Patentansprüche

1. Verfahren zur Sicherung eines USB-Protokolls durch Authentifizierung eines Peripheriegeräts (14) durch eine Vorrichtung (12) und durch Verschlüsselung des Austauschs zwischen dem Peripheriegerät (14) und der Vorrichtung (12), wobei das Peripheriegerät (14) nach dem USB-Protokoll funktioniert, die Vorrichtung (12) mindestens einen Eingangsanschluss (16) umfasst, das Verfahren umfassend mindestens den folgenden Schritt:
- Anschließen des Peripheriegerät (14) an einem Eingangsanschluss (16),
- Erkennen durch die Vorrichtung (12) des Peripheriegeräts (14) nur dann, wenn das Peripheriegerät (14) ein Umwandlungsprotokoll des USB in ein paketvermitteltes lokales Netz, bezeichnet als lokales Netz (20), aktiviert hat,
- Verbinden der Vorrichtung (12) mit dem lokalen Netz (20), wobei eines von der Vorrichtung (12) und dem Peripheriegerät (14) ein Server (24) für das lokale Netzwerk (20) ist, wobei der Server (24) geeignet ist, um auf der Transportschicht gemäß einem einzelnen vordefinierten Protokoll zu kommunizieren,
- Einrichten eines Kommunikationskanals (26) zwischen dem anderen Element von der Vorrichtung (12) und dem Peripheriegerät (14) und dem Server (24),
- Anfordern von Zugriffsrechten auf die Vorrichtung (12) durch das Peripheriegerät (14) über den Kommunikationskanal (26).

2. Verfahren nach Anspruch 1, wobei sich die Vorrichtung (12) bei dem Verbindungsschritt über eine spezifische IP-Adresse anmeldet.

3. Verfahren nach Anspruch 1 oder 2, wobei bei dem Verbindungsschritt Kommunikationen gefiltert werden, die von Protokollen stammen, die sich von dem vordefinierten Protokoll unterscheiden.

4. Verfahren nach einem der Ansprüche 1 bis 3, wobei das vordefinierte Protokoll ein Protokoll ist, das die Einrichtung und Aufrechterhaltung eines sicheren Kommunikationskanals gewährleistet, insbesondere mit vorheriger Authentifizierung der an dem Kommunikationskanal beteiligten Parteien.

5. Verfahren nach einem der Ansprüche 1 bis 4, wobei das vordefinierte Protokoll ein Protokoll ist, das ausgewählt ist aus der Gruppe, bestehend aus dem Protokoll SSH, dem Protokoll SSL und dem Protokoll TLS.

6. Verfahren nach einem der Ansprüche 1 bis 5, wobei der Kommunikationskanals (26) ein verschlüsselter Kanal ist.

7. Verfahren nach Anspruch 6, wobei der Kommunikationskanal (26) gemäß einem asymmetrischen Verschlüsselungsprotokoll verschlüsselt ist, das asymmetrische Verschlüsselungsprotokoll vorzugsweise umfassend einen Satz privater Schlüssel, wobei jeder private Schlüssel in einem digitalen Tresor des Peripheriegeräts (14) gespeichert wird.

## Claims

1. Method for securing a USB protocol by authentication of a peripheral (14) by an appliance (12) and by encryption of exchanges between the peripheral (14) and the appliance (12), the peripheral (14) functioning according to the USB protocol, the appliance (12) comprising at least one input port (16), the process having at least one step of:
- connecting the peripheral (14) to an input port (16),
- detection by the device (12) of the peripheral (14) only if the peripheral (14) has activated a protocol for transforming the USB into a packet-switched local area network (20),
- connection of the apparatus (12) to the local area network (20), one of the apparatus (12) and the peripheral (14) being a server (24) for the local area network (20), the server (24) being adapted to communicate at the transport layer according to a single predefined protocol,
- establishment of a communication channel (26) between the other element of the device (12) and the peripheral (14) and the server (24),
- request by the peripheral (14) for access rights to the device (12) via the communication channel (26).

2. A method according to claim 1, wherein, in the connection step, the device (12) connects via a specific IP address.

3. A method according to claim 1 or 2, in which, during the connection step, communications emanating from protocols other than the predefined protocol are filtered.

4. A method according to any one of claims 1 to 3, in which the predefined protocol is a protocol guaranteeing the establishment and maintenance of a secure communication channel, in particular with prior authentication of the parties involved in the communication channel.

5. A method according to any one of claims 1 to 4, wherein the predefined protocol is a protocol selected from the group consisting of SSH protocol, SSL protocol and TLS protocol.

6. A method according to any one of claims 1 to 5, wherein the communication channel (26) is an encrypted channel.

7. A method according to claim 6, in which the communication channel (26) is encrypted according to an asymmetric encryption protocol, the asymmetric encryption protocol preferably comprising a set of private keys, each private key being stored in a digital safe of the device (14).
